# EUROPÄISCHE PATENTSCHRIFT

(11) **EP 0 442 351 B1**
(45) Veröffentlichungstag und Bekanntmachung des Hinweises auf die Patenterteilung: **15.09.1993**
(21) Anmeldenummer: 91101518.8
(22) Anmeldetag: 05.02.1991
(51) Int. Cl.: G01J 5/10, H03M 1/00, G01D 3/02

(54) **Infrarot-Temperatursensor**
Infrared temperature sensor
Capteur de températures aux infrarouges

(30) Priorität: 13.02.1990 DE 4004408
(43) Veröffentlichungstag der Anmeldung: 21.08.1991
(73) Patentinhaber: ULTRAKUST electronic GmbH, 94239 Gotteszell (DE)
(72) Erfinder: Böhm, Alfred, W-8374 Viechtach (DE)
(74) Vertreter: Heim, Hans-Karl, Dipl.-Ing.

(56) Entgegenhaltungen:
- GB-A- 2 133 877
- GB-A- 2 134 251
- US-A- 4 634 294
- PATENT ABSTRACTS OF JAPAN, unexamined applications, P field, Band 12, Nr. 199, 9. Juni 1988 THE PATENT OFFICE JAPANESE GOVERNMENT Seite 139 P 714
- PATENT ABSTRACTS OF JAPAN, unexamined applications, P field, Band 11, Nr. 9, 10. Januar 1987 THE PATENT OFFICE JAPANESE GOVERNMENT Seite 142 P 534
- PATENT ABSTRACTS OF JAPAN, unexamined applications, P field, Band 10, Nr. 183, 26. Juni 1986 THE PATENT OFFICE JAPANESE GOVERNMENT Seite 99 P 472

## Beschreibung

Die Erfindung betrifft einen Infrarot-Temperatursensor mit einem Sensorelement, das ein analoges Ausgangssignal generiert, welches in ein digitales Signal umgewandelt und verarbeitet wird.

Derartige Infrarot-Temperatursensoren werden in Strahlungspyrometern für eine berührungslose Temperaturmessung verwendet. Sie eignen sich insbesondere zur Messung von sehr hohen Temperaturen, die mit Kontakt-Temperaturmeßmethoden nur unter sehr großem Aufwand zu ermitteln wären.

So wird ein direkter Kontakt des Sensors mit den sehr heißen, zu messenden Teilen oder mit einer eventuell aggressiven Umgebungsatmosphäre des zu messenden Teils vermieden.

Die Strahlungspyrometer arbeiten entweder mit manuell einstellbaren Meßparametern oder mit festen Meßparametern, die eine nur geringe Flexibilität in der Anwendbarkeit der Strahlungspyrometer zur Folge haben.

In der japanischen Patentanmeldung JP 61-30 728 (Patent Abstracts of Japan, Vol. 10/No. 183; P-472, June 26, 1986) ist eine Infrarot-Temperaturmeßeinrichtung beschrieben, bei der ebenfalls ein analoges Meßsignal in ein digitales Signal überführt wird. In dieser Vorrichtung ist ein Detektor drehbar aufgehängt, wobei die Umdrehungsgeschwindigkeit in Abhängigkeit des Ausgangssignals des Detektors geregelt wird.

Eine weitere Vorrichtung zur Strahlungsmessung ist aus der JP A 61-186824 (Patent Abstracts of Japan, P Vol. 11/No. 9; P-534, January 10, 1987) bekannt. Bei dieser Temperaturmeßeinrichtung wird ein Ausgangssignal in Abhängigkeit von der Größe des Meßsignals verschiedenen Verstärkern zugeführt, wodurch eine automatische Einstellung des Meßbereiches bewirkt wird.

Die digitale Verarbeitung von Meßgrößen in Strahlungsthermometern ist aus der japanischen Patentanmeldung JP-A 63-3231 (Patent Abstracts of Japan, Vol. 12/No. 199; June 9, 1988; P-714) bekannt. Jedoch wird die Korrektur und die Linearisierung des Meßsignals bei dieser bekannten Vorrichtung vor der Überführung in ein digitales Signal durchgeführt. Die hierfür verwendeten analogen Bauteile führen wiederum zu temperaturabhängigen Störeinflüssen auf das Meßsignal, die die Meßgenauigkeit negativ beeinflussen können.

Aus der GB 2 133 877 A ist eine Vorrichtung beschrieben, mit der sich die Temperatur der Rotorblätter eines Gasturbinenrotors bestimmen läßt. Bei dieser Vorrichtung erfolgt die Linearisierung und Bearbeitung der Meßsignale nach der Umwandlung in ein digitales Signal. Das Einsatzgebiet dieser Vorrichtung ist jedoch beschränkt, da die Vorrichtung fest auf die der Messung zugrundeliegenden Meßparameter eingestellt werden muß.

Es ist **Aufgabe** der Erfindung, einen Infrarot-Temperatursensor zu schaffen, der auf eine einfache Weise eine Anpassung an verschiedene Meßbedingungen ermöglicht und der eine sehr temperaturstabile Auswertung des Ausgangssignals des Sensorelements ermöglicht.

Die Erfindung stellt zur Lösung dieser Aufgabe einen Infrarot-Temperatursensor zur Verfügung, der eine Wandlereinrichtung zur Umwandlung des analogen Ausgangssignals des Sensorelements in ein digitales Signal aufweist.

Die Wandlereinrichtung besteht aus einem Spannungs/Frequenz-Umsetzer, dem ein einstellbarer Frequenzzähler nachgeordnet ist. Hierdurch können nicht nur der Meßbereich, sondern auch die Auflösung bzw. die Meßgeschwindigkeit der des Infrarot-Temperatursensors individuellen Erfordernissen angepaßt werden. Durch Bearbeitung des Meßsignals nach der Digitalisierung werden Störeinflüsse analoger Bauteile vermieden und die Meßgenauigkeit erhöht.

Vorteilhafte Weiterbildungen der Erfindung sind Gegenstand der abhängigen Patentansprüche.

Durch die erfindungsgemäße Ausbildung des Infrarot-Temperatursensors wird das analoge Ausgangssignal des Sensorelements frühzeitig vor seiner Auswertung und Linearisierung digitalisiert, wobei aufgrund der wählbaren Auflösung der Wandlereinrichtung zwischen einer sehr hohen Auflösung und einer geringeren Meßgeschwindigkeit oder zwischen einer geringeren Auflösung und einer hohen Meßgeschwindigkeit gewählt werden kann. Der Infrarot-Temperatursensor ist somit für vielfältige Meßaufgaben geeignet und läßt sich somit ohne Probleme an verschiedenen Meßplätzen einsetzen.

Ein weiterer Vorteil des Infrarot-Temperatursensors besteht darin, daß die Linearisierung und Auswertung des Ausgangssignals nach der Digitalisierung des vom Sensorelement erzeugten Ausgangssignals erfolgen. Hierdurch werden teuere Analogschaltkreise und Kompensationswiderstände zur Temperaturkompensation durch aufwendige Linearisierungseinrichtungen vermieden, die gerade bei einer Verwendung des Infrarot-Temperatursensors bei unterschiedlichen Umgebungstemperaturen eine potentielle Fehlerquelle darstellen.

Neben der Linearisierung kann ebenfalls die Meßbereichsauslegung programmgesteuert erfolgen. Die Erfindung eignet sich besonders zur Messung von sich verformenden oder bewegten Objekten.

In einer vorteilhaften Weiterbildung der Erfindung ist die Wandlereinrichtung aus einem Spannungs/Frequenz-Umsetzer und einem nachgeordneten, einstellbaren Frequenzzähler gebildet. Auf diese Weise wird das vom Sensorelement erzeugte analoge Ausgangssignal in eine Impulsfolge umgewandelt, deren Frequenz von der Amplitude des Ausgangssignals abhängig ist. Durch den nachgeordneten einstellbaren Frequenzzähler wird dann je nach gewünschter
Auflösung die Torzeit variiert, wobei ein digitales Signal entsteht, das
in der digitalen Signalverarbeitungseinrichtung verarbeitet werden kann. Die Auflösung des Frequenzzählers ist dabei über die Signalverarbeitungseinrichtung programmierbar.

Vorteilhafterweise ist in unmittelbarer Nähe des Sensorelements ein Temperatursensor angeordnet, der ein temperaturabhängiges Vergleichsstellensignal generiert, um Temperatureinflüsse auf das Sensorelement zu kompensieren.

Weiterhin kann vorteilhafterweise eine Regelspannungsquelle zur Erzeugung eines Referenzsignals vorgesehen sein, aufgrund dessen sich Temperatureinflüsse auf die Auswerteschaltung überprüfen und kompensieren lassen.

In einer vorteilhaften Weiterbildung der Erfindung ist weiterhin ein Anschluß für einen Kontakttemperaturfühler vorgesehen, anhand dessen sich der Emissionsfaktor ermitteln läßt.

Die oben aufgeführten Meß- und Referenzgrößen lassen sich in einer vorteilhaften Weiterbildung der Erfindung über einen programmgesteuerten Umschalter entweder alternierend auf den Eingang der einstellbaren Wandlereinrichtung legen und/oder auf mehrere Eingänge der Signalverarbeitungseinrichtung verteilen.

Die Steuerung der Wandlereinrichtung und des Umschalters erfolgt mittels einer Steuerlogik, die in einem Mikroprozessor der Signalverarbeitungseinrichtung implementiert ist.

Die digitale Signalverarbeitungseinrichtung ist vorteilhafterweise mit mehreren Ein- und Ausgängen versehen. So können mehrere Analog/Digital-Wandler als Eingänge für Analogsignale und Referenzspannungen vorgesehen sein. Ein interner Bus (I²C-Bus) ist für die Kommunikation der Signalverarbeitungseinrichtung mit Eingabe- und Ausgabe-Geräten vor Ort vorgesehen, z.B. zur Ansteuerung eines Displays,zum Anschluß einer Tastatur zur Veränderung von Meßparametern etc..

In einer vorteilhaften Weiterbildung der Erfindung hat die Signalverarbeitungseinrichtung des Infrarot-Temperatursensors einen Anschluß für ein externes Bussystem zur Eingabe und Ausgabe, über den die Signalverarbeitungseinrichtung insbesondere steuer- und programmierbar ist. Auf diese Weise können von einer zentralen Steuereinheit mehrere Temperatursensoren und andere Meßeinrichtungen zentral gesteuert werden, wobei eine Umprogrammierung z.B. der Meßparameter oder der Linearisierungsdaten von der zentralen Steuerungseinheit aus möglich ist. Die zentrale Steuerungseinheit kann beispielsweise durch einen Personalcomputer gebildet sein. Als Bussystem eignet sich hervorragend eine Zweidrahtleitung, die mit geringem technischem Aufwand den Anschluß mehrerer Meßstationen ermöglicht, wobei die Signale der Meßstationen und der zentralen Steuereinheit durch eine digitale Kennung, z.B. im Multiplex-Verfahren oder einem anderen Kodierverfahren, erfolgen kann. Der Anschluß der Signalverarbeitungseinrichtung an das externe Bussystem erfolgt vorteilhafterweise über einen Optokoppler, um die Übertragung von Störeinflüssen zwischen dem Bussystem und der digitalen Signalverarbeitungseinrichtung zu vermeiden. Die Spannungsversorgung der Signalverarbeitungseinrichtung ist darüber hinaus durch einen DC/DC-Wandler vom Netz galvanisch getrennt, falls die Energieversorgung nicht über eine Zweidrahtleitung erfolgt.

Durch den erfindungsgemäßen Infrarot-Temperatursensor wird eine Meßeinrichtung geschaffen, die eine berührungslose Temperaturmessung mit variabler Abtastrate erlaubt, wobei eine automatische Emissionsfaktorkorrektur über ein anschließbares Kontaktthermometer durchführbar ist und der über Schnittstellen feldbusfähig ist und mit peripheren gleichgeordneten und übergeordneten Meß- und Datenverarbeitungseinrichtungen in Kommunikation treten kann.

Die Erfindung wird nachfolgend beispielsweise in einer schematischen Zeichnung beschrieben. In dieser zeigen:
- Fig. 1: einen Längsschnitt durch einen Infrarot-Temperatursensor mit integrierter Optik und Elektronik;
- Fig. 2: ein Schaltungsdiagramm des Infrarot-Temperatursensors mit der Signalverarbeitungseinrichtung;
- Fig. 3: das Blockschema eines Verbundnetzes mit mehreren zentral gesteuerten Infrarot-Temperatursensoren und
- Fig. 4: einen Längsschnitt eines Kontaktthermometers mit Mikroschalter zur Emissionsfaktorermittlung.

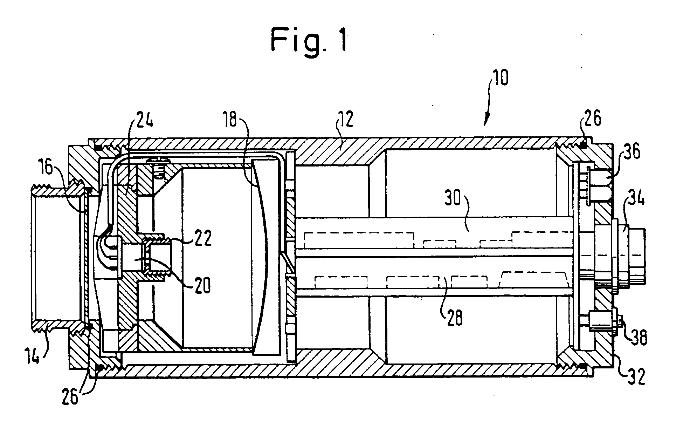

In Fig. 1 ist der Längsschnitt durch einen Infrarotsensor 10 dargestellt, der ein längliches, zylinderförmiges Gehäuse 12 aufweist, das aus korrosionsfestem und gegen elektromagnetische Strahlung abschirmenden Material besteht. Dieses Gehäuses 12 beherbergt das Sensorelement, die Optik und die Elektronik des Infrarot-Temperatursensors.

An seinem vorderen Längsende hat das Gehäuse 12 eine Halterung 14, die mit einem Gewinde in dem Gehäuse 12 gehalten ist. Diese Halterung dient zum Fixieren dem Feststoffscheibe 16, die aus einem Material besteht, das für die gewünschte Infrarotstrahlung mit möglichst hohem Transmissionsgrad durchlässig ist. Diese Feststoffscheibe 16 dient weiterhin als mechanischer Schlagschutz gegen Fremdeinflüsse sowie als Filter für unerwünschte Strahlung. Diese Feststoffscheibe 16 kann auch in Art einer Linse als optisch wirksames Element ausgebildet sein.

Die von einem Meßobjekt ausgehende Infrarotstrahlung fällt durch die Feststoffscheibe 16 auf einen Reflektorspiegel 18, durch den die Strahlung auf einen Detektor 20 gebündelt wird, der ein als Thermopile ausgebildetes Sensorelement und einen Temperatursensor aufweist. Dieser Detektor 20 hat ebenfalls ein für die zu detektierende Strahlung geeignetes Filterfenster. Vor dem Detektor 20 ist eine ringförmige Blende 22 angeordnet, die zur Vermeidung von Randstrahlung dient, die als Störstrahlung das Meßergebnis verfälschen könnte. Der Detektor 20 ist mittels einer Halterung 24 im Brennpunkt des fokussierenden Reflektorspiegels 18 gehalten. Diese Halterung 24 dient zudem zur thermischen und elektrischen Isolierung des Detektors 20 vom Gehäuse 12.

Zwischen den Stirnseiten und dem rohrförmigen Teil des Gehäuses sind Dichtringe 26 vorgesehen, um eine Spritzwasserdichtigkeit zur Sicherung der innenliegenden Elektronik und Optik zu gewährleisten.

Im rückwärtigen Teil des Gehäuses sind zwei Platinen 28, 30 für die Wandler- Auswerte- und Datenübertragungselektronik angeordnet, die nachfolgend noch näher beschrieben wird.

Die rückwärtige Stirnwand des Gehäuses wird von einer kunststoffolienbeschichteten Rückwand 32 gebildet, in deren Zentrum ein mehrpoliger, wasserdichter Stecker 34 zum Anschluß des Infrarotsensors an die Versorgungsspannung und an eine Signaldatenleitung angeordnet ist. Dieser Stecker enthält ebenfalls Anschlüsse für Analogausgänge und Peripheriegeräte.

Die Rückwand 32 weist darüber hinaus noch ein Infrarot-Übertragungselement 36 auf, das zur Fernbedienung des Infrarotsensors von einem nachfolgend noch beschriebenen Infrarot-Sendeelement vorgesehen ist.

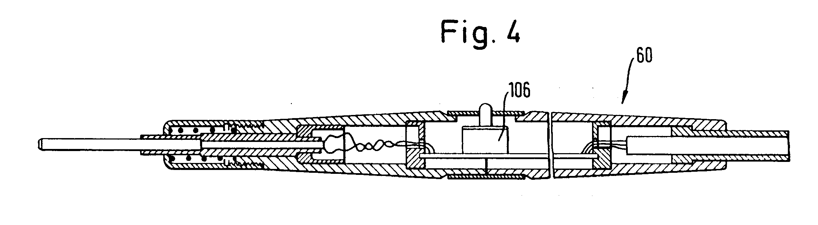

Als dritten Anschluß hat die Rückwand 32 eine kombinierte Steckervorrichtung 38 für einen Oberflächentemperatursensor mit einem integrierten Kontakt für den Start einer automatischen Emissionsfaktorermittlung. Der Temperatursensor ist in Fig. 4 noch näher beschrieben.

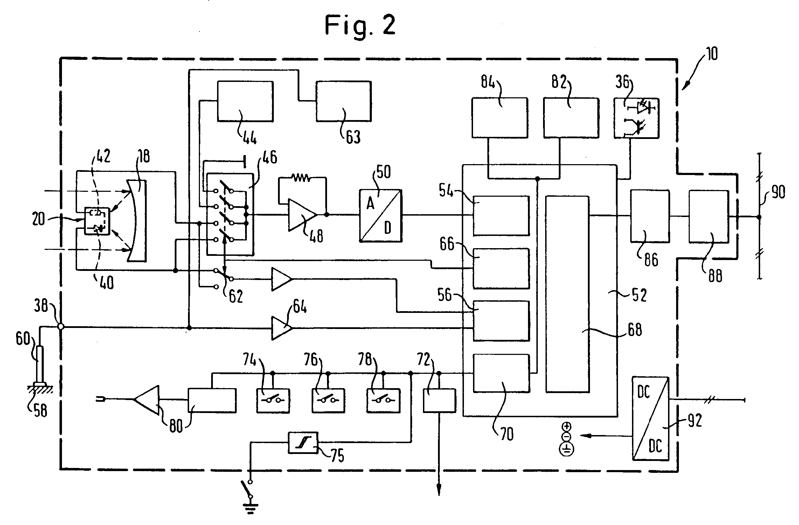

Fig. 2 zeigt das Blockschaltbild des Infrarot-Temperatursensors 10 aus Fig. 1.

Auf der linken Seite des Blockschaltbilds ist die als Reflektorspiegel 18 ausgebildete optische Fokussiereinrichtung dargestellt. Von dort fallen die eintretenden Infrarotstrahlen auf den Detektor 20, der ein als Thermopile ausgebildetes Sensorelement 40 und einen als Thermistor ausgebildeten Temperatursensor 42 aufweist, der - wie das Sensorelement 40 - ein analoges Ausgangssignal generiert. Die Anschlüsse des Thermopiles 40 und des Thermistors 42 sind zusammen mit dem Ausgang einer Referenzspannungsquelle 44 zur Selbstkalibrierung des Infrarot-Temperatursensors auf einen gesteuerten Kanalwahlschalter 46 gelegt. Über diesen ist das Meßsignal des Thermopiles 40, das Vergleichsstellensignal des Thermistors 42 und das Referenzsignal der Referenzspannungsquelle 44 auf einen programmierbaren Verstärker 48 gelegt, der als Normierungsverstärker arbeitet. Der Ausgang des Verstärkers 48 ist mit einem Spannungs /Frequenzumsetzer 50 verbunden, der aus dem verstärkten Analogsignal ein digitales Signal erzeugt, dessen Frequenz von der Amplitude des Analogsignals abhängt. Das digitale Frequenzsignal ist auf einen ersten Eingang eines Mikroprozessors 52 gelegt, der das Herz der Signalverarbeitungseinrichtung des Infrarot-Temperatursensors 10 darstellt.

Der erste Eingang des Mikroprozessors 52 ist durch einen Zählerbaustein 54 mit variabler Auflösung, insbesondere zwischen 8 und 16 Bit, gebildet. Hierdurch ist es möglich, zu bestimmen, ob man mit sehr hoher Auflösung oder mit hoher Geschwindigkeit und geringerer Auflösung messen will.

Der Mikroprozessor 52 hat darüber hinaus als einen 10-Bit Analog/Digital-Wandler 56 ausgebildeten zweiten Eingang zur Messung der Temperatur des Meßobjekts 58 über ein in Fig. 4 detaillierter dargestelltes Kontaktthermometer 60 zur Emissionsfaktorermittlung. Der zweite Eingang dieses Analog /Digitalwandlers 56 ist entweder direkt mit dem Ausgang des Thermopiles verbunden oder ebenfalls über einen programmgesteuerten Schalter 62 zwischen verschiedenen analogen Ausgangsspannungen und eventuellen Referenzspannungen um schaltbar. Dies erlaubt z.B. eine schnelle Infrarottemperatur- oder Vergleichsstellensignal-Messung aufgrund der parallelen Analog /Digitalwandlung. Der Eingang für das Kontaktthermometer 60 ist mit einer Konstantstromquelle 63 zur Versorgung eines Widerstandsthermometers in dem Kontaktthermometer 60 verbunden, wobei das Ausgangssignal des Kontaktthermometers 60 über einen Eingangsverstärker 64 auf den Analog /Digital-Wandler 56 geführt ist. Auf diese Weise läßt sich der Emissionsfaktor eines unbekannten Strahlers ermitteln und eine automatische Emissionsfaktorkorrektur durchführen. Die Erfassung des Emissionsfaktors eines grauen Strahlers gestaltet sich oftmals schwierig. In bekannten Anlagen wird häufig die Methode der Vergleichsmessung angewandt und dann auf den Emissionsfaktor umgerechnet, bzw. die vom Infrarot-Thermometer ermittelte Temperatur wird durch Verstellen des Emissionsfaktors gleich der gemessenen Temperatur eines Kontaktthermometers eingestellt. Hierzu ist jedoch der Emissionsfaktor in dem bekannten Infrarot-Temperatursensor neu einzustellen. Dies kann hier entfallen, da das Ergebnis der Oberflächenkontaktmessung des Meßobjekts gleich für eine automatische Ermittlung des Emissionsfaktors berücksichtigt wird.

Der Mikroprozessor 52 hat weiterhin eine Steuerlogik 66, die die Steuerung des Kanalwahlschalters 46 und gegebenenfalls des Schalters 62 übernimmt.

Der Mikroprozessor 52 hat auch eine Rechenlogik 68, die die Linearisierung des Meßsignals, die Normierung, die Vergleichsstellenberechnung und verschiedene Kompensationen durchführt.

Des weiteren ist in dem Mikroprozessor 52 eine als serieller Bus ausgebildete interne Schnittstelle (I²C-Bus) 70 vorgesehen, um insbesondere vor Ort Analogsignale zur Meßwertdarstellung ausgeben zu können. An den internen Bus 70 ist eine serielle Tastatur-Anzeigenerweiterung 72 als Eingabetastatur und Meßwert- bzw. Zustandsanzeige angeschlossen. Des weiteren ist mit dem internen Bus 70 eine Emissionsfaktoreinstellung 74, eine Dämpfungseinstellung 76, Schaltausgänge 78 und ein Analogausgang 80 verbunden, der aus einem Digital /Analog-Umsetzer und einem Verstärker besteht. Dieser Analogausgang 80 dient als analoger Spannungs- oder Stromausgang für die vom Sensorelement 40 erzeugte Analogspannung.

Der Mikroprozessor 52 ist mit einem elektrisch löschbaren Speicherelement 82 zur Speicherung der Sensorkennwerte (z.B.EEPROM) und anderer sich ändernder Betriebsdaten verbunden. Die abgespeicherten Werte bleiben selbst bei einem Stromausfall des Infrarot-Temperatursensors erhalten, so daß diese danach nicht neu eingegeben werden müssen. Der Mikroprozessor 52 ist zusätzlich mit einem EPROM und/oder RAM 84 verbunden, der den Programmspeicher der Signalverarbeitungseinrichtung bildet. Auf diesen Speicher kann über ein nachfolgend noch beschriebenes externes Bussystem zurückgegriffen werden, um eine Änderung von Meßbereichen, Grenzwerten oder Analog-Ein- und -Ausgängen zu bewirken.

Der Mikroprozessor 52 ist über einen Optokoppler 86 mit einem seriellen Schnittstellenbaustein 88 verbunden, der wiederum an ein externes Bussystem 90 angeschlossen ist, das als Zweidrahtleitung ausgebildet ist. Über diese Zweidrahtleitung kann gleichzeitig die Energieübertragung und die Datenübertragung über Amplitudenmodulation oder Frequenzmodulation und entsprechende handelsübliche Auskoppelmodule erfolgen.

Der serielle Schnittstellenbaustein 88 ist als Schnittstellentreiber-Empfänger für symmetrische oder unsymmetrische Datenübertragung mit unterschiedlicher Baud-Rate (hier speziell 76.800 Bit/sec) vorgesehen.

Falls das externe Bussystem 90 nicht als Zweidrahtleitung zur gleichzeitigen Energie- und Datenübertragung vorgesehen ist, ist ein Gleichspannungswandler 92 in der Signalverarbeitungseinrichtung vorgesehen, der eine galvanische Trennung zur Isolierung der Sensoreinheit vom Netz bewirkt.

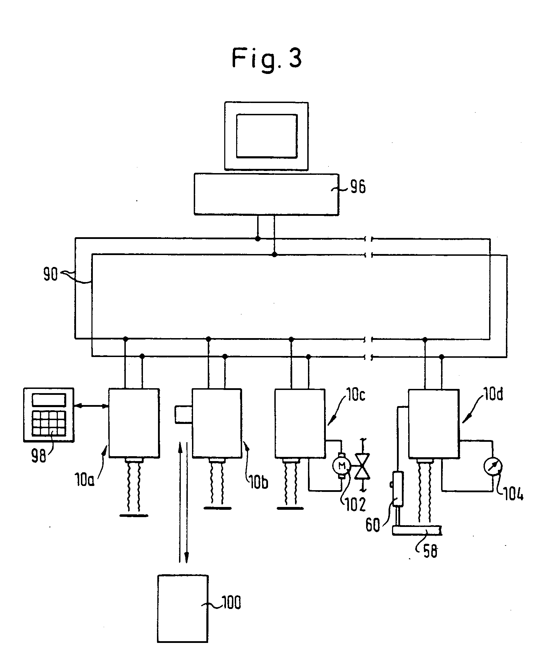

Der Mikroprozessor 52 ist mit einer Infrarot-Übertragungseinheit 36 verbunden, die eine Sende- und Empfängerdiode für einen verbindungsfreien, drahtlosen Datenaustausch zwischen der Sensoranordnung 10 und einer in Fig. 3 noch näher beschriebenen externen Lese- bzw. Sendeeinheit vorgesehen.

Fig. 3 zeigt exemplarisch Konfigurationsmöglichkeiten mehrerer Infrarot-Temperatursensoren 10a, b, c und d, die über den Zweidrahtbus 90 mit einer als Master fungierenden übergeordneten Steuereinheit 96 verbunden sind. Diese Steuereinheit 96 kann beispielsweise ein intelligentes Meßgerät , ein Rechner oder ein Transmitter sein. Das Protokoll der Datenübertragung kann in bekannter Weise beliebig gestaltet werden.

An den Infrarot-Temperatursensor 10a ist über die in Fig. 2 dargestellte Tastatur-Anzeigenerweiterung 72 eine Tastatur mit Display 98 angeschlossen.

Der Infrarot-Temperatursensor 10b befindet sich über die in Fig. 1 und 2 dargestellte Infrarot-Übertragungseinheit 36 in Sendekontakt mit einer weiteren externen Steuereinheit 100, die ebenfalls über eine Infrarot-Übertragungseinheit verfügt, um den Infrarot-Sensor 10b von einer zentralen Stelle aus steuern und überwachen zu können.

Der in Fig. 2 dargestellte Analogausgang 80 des Infrarot-Temperatursensors 10c ist mit einem Antrieb 102 verbunden, der zu Regelungs- und Steuerungsfunktionen verwendet wird. Die Steuerung erfolgt hierbei über den Stromfluß.

An den Infrarot-Temperatursensor 10d ist ein Kontaktthermometer 60 angeschlossen, das die Temperatur des strahlungsemittierenden Meßobjekts 58 mißt. Des weiteren ist an den Infrarot-Temperatursensor 102d eine digitale oder analoge Meßwertanzeige 104 angeschlossen.

In Fig. 4 ist das Kontaktthermometer 60 dargestellt. Es ist als Taststift ausgebildet und verfügt über einen Taster 106, durch dessen Betätigung eine automatische Berechnung des Emissionsfaktors durchgeführt wird. Dieser Wert wird anschließend in dem als EEPROM ausgebildeten elektrisch löschbaren Speicherelement 84 abgelegt und dort zur Berechnung zukünftiger Meßwerte herangezogen. Erfolgt eine Kalibrierungsprozedur ohne Kontaktthermometer, so wird der intern eingestellte Emissionsfaktor verwendet. Der Emissionsfaktor kann selbstverständlich auch über die Zweidrahtleitung 90 von der zentralen Steuereinheit 96 eingestellt werden. Dies ist sehr vorteilhaft, weil die Infrarot-Temperatursensoren oft sehr unzugänglich eingebaut sind.

Der Temperatursensor in Fig. 2 enthält einen Eingangsbaustein 75, durch den ein Meßzyklus mit Hilfe eines externen Triggersignals ausgelöst werden kann.

## Patentansprüche

1. Infrarot-Temperatursensor
mit einem für Infrarotstrahlung empfindlichen Sensorelement, das ein analoges Ausgangssignal generiert,
**gekennzeichnet** durch
mindestens eine in ihrer Auflösung und im Meßbereich einstellbare Wandlereinrichtung (50,54) zur Umwandlung des Analogsignals in ein digitales Signal, eine digitale Verarbeitungseinrichtung (52 bis 88) zur programmgesteuerten Linearisierung und Auswertung des digitalen Signals, wobei die Wandlereinrichtung (50,54) aus einem Spannungs/Frequenz-Umsetzer (50) und einem nachgeordneten einstellbaren Frequenzzähler (54) gebildet ist.

2. Infrarot-Temperatursensor nach Anspruch 1,
dadurch **gekennzeichnet,**
daß der Frequenzzähler (54) programmierbar ist.

3. Infrarot-Temperatursensor nach einem der vorhergehenden Ansprüche,
dadurch **gekennzeichnet,**
daß in thermischem Kontakt mit dem Sensorelement (40) ein Temperatursensor (42) angeordnet ist, der ein temperaturabhängiges Vergleichsstellensignal generiert.

4. Infrarot-Temperatursensor nach einem der vorhergehenden Ansprüche,
dadurch **gekennzeichnet,**
daß eine Regelspannungsquelle (44) zur Erzeugung eines Referenzsignals vorgesehen ist.

5. Infrarot-Temperatursensor nach Anspruch 3 oder Anspruch 3 und 4,
dadurch **gekennzeichnet,**
daß das Analogsignal des Sensorelements (40), das Vergleichsstellensignal und gegebenenfalls das Referenzsignal alternierend auf den Eingang der Wandlereinrichtung (50,54) gelegt sind.

6. Infrarot-Temperatursensor nach Anspruch 5,
dadurch **gekennzeichnet,**
daß eine programmgesteuerte Umschaltung (46) für die Verteilung von gemessenen Signalen auf die Eingänge (50,54;56) der Signalverarbeitungseinrichtung vorgesehen ist.

7. Infrarot-Temperatursensor nach einem der vorhergehenden Ansprüche,
dadurch **gekennzeichnet,**
daß die Signalverarbeitungseinrichtung als zusätzlichen Eingang für gemessene Signale einen Analog/Digitalwandler (56) und einen Mikroprozessor (52) mit einer Rechen- (68) und Steuerlogik (66) aufweist.

8. Infrarot-Temperatursensor nach einem der vorhergehenden Ansprüche,
dadurch **gekennzeichnet,**
daß ein programmierbarer Speicher (82) zur Bereitstellung von Linearisierungs- und Kalibrierungsdaten für gemessene Signale vorgesehen ist,
daß die Signalverarbeitungseinrichtung einen internen Bus (70) zur Eingabe und Ausgabe von Signalen und Steuergrößen aufweist, und
daß ein Eingang (38) für ein Kontaktthermometer (60) zur Temperaturbestimmung des Meßobjekts und zur Emissionsfaktorermittlung vorgesehen ist.

9. Infrarot-Temperatursensor nach einem der vorhergehenden Ansprüche,
dadurch **gekennzeichnet,**
daß die Signalverarbeitungseinrichtung einen Anschluß (86,88), insbesondere als Optokoppler (86) für ein externes Bussystem (90) zur Eingabe/Ausgabe aufweist, über den die Signalverarbeitungseinrichtung inbesondere steuer- und programmierbar ist.

10. Infrarot-Temperatursensor nach Anspruch 9,
dadurch **gekennzeichnet,**
daß der Anschluß (86,88) einen Schnittstellen-Baustein (88) aufweist, der an ein Bussystem (90) mit Zweidrahtleitung angeschlossen ist,
daß die Zweidrahtleitung (90) sowohl zur Energie- als auch zur Datenübertragung ausgebildet ist, und daß eine zentrale Programm- und Steuereinheit (96) an das Bussystem (90) angeschlossen ist.

## Claims

1. Infrared temperature sensor
with a sensor element sensitive to infrared radiation and which generates an analog output signal,
**characterized** by
at least one converter means (50, 54) adjustable as regards its resolution and its measuring range for converting the analog output signal into a digital signal,
a digital processing means (52 to 88) for the program-controlled linearization and evaluation of the digital signal,
wherein the converter means (50, 54) is formed by a voltage-frequency converter (50) and a series-connected adjustable frequency counter (54).

2. Infrared temperature sensor according to claim 1,
**characterized** in that
the frequency counter (54) is programmable.

3. Infrared temperature sensor according to one of the preceding claims,
**characterized** in that
a temperature sensor (42) is positioned in thermal contact with the sensor element (40) and said temperature sensor (42) generates a temperature-dependent reference junction signal.

4. Infrared temperature sensor according to one of the preceding claims,
**characterized** in that
a control voltage source (44) is provided for generating a reference signal.

5. Infrared temperature sensor according to claim 3 or claim 3 and 4,
**characterized** in that
the analog output signal of the sensor element (40), the reference junction signal and optionally the reference signal are alternately applied to the input of the converter means (50, 54).

6. Infrared temperature sensor according to claim 5,
**characterized** in that
there is a program-controlled switching (46) for the distribution of the measured signals to the inputs (50, 54, 56) of the signal processing means.

7. Infrared temperature sensor according to one of the preceding claims,
**characterized** in that
the signal processing means has an analog-digital converter (56) as an additional input for measured signals, and a microprocessor (52) with a computing (68) and control (66) logic.

8. Infrared temperature sensor according to one of the preceding claims,
**characterized** in that
a programmable memory (82) is to provide linearization and calibration data for measured signals, the signal processing means has an internal bus (70) for inputting and outputting signals and control quantities, and
an input (38) for a contact thermometer (60) for determining the temperature of a measurement object and for emission factor determination is provided.

9. Infrared temperature sensor according to one of the preceding claims,
**characterized** in that
the signal processing means has a connection (86, 88), in particular as an optical coupler (86), for an external bus system (90) for inputting and outputting, by means of which the signal processing means is in particular controllable and programmable.

10. Infrared temperature sensor according to claim 9,
**characterized** in that
the connection (86, 88) has an interface module (88), which is connected to a bus system (90) with a two-wire line,
the two-wire line (90) is constructed both for energy and data transmission, and
a central program and control unit (96) is connected to the bus system (90).

## Revendications

1. Thermomètre à infrarouge équipé d'un capteur à l'infrarouge, qui délivre un signal analogique, caractérisé en ce qu'il comporte au moins un dispositif convertisseur (50, 54) à définition et plage de mesure réglables, transformant le signal analogique en signal numérique, un dispositif de traitement numérique (52 à 88) pour linéariser, selon un programme, et exploiter le signal numérique, le dispositif convertisseur (50, 54) étant composé d'un convertisseur tension/fréquence (50) suivi d'un compteur de fréquence réglable.

2. Thermomètre à infrarouge selon la revendication 1, caractérisé en ce que le compteur de fréquence (54) est programmable.

3. Thermomètre à infrarouge selon une des revendications précédentes, caractérisé en ce qu'un thermomètre (42) est en contact thermique avec l'élément capteur (40) et délivre un signal de comparaison, fonction de la température.

4. Thermomètre à infrarouge selon une des revendications précédentes, caractérisé en ce qu'il comporte une source de tension régulée (44) servant à obtenir un signal de référence.

5. Thermomètre à infrarouge selon la revendication 3 ou les revendications 3 et 4, caractérisé en ce que le signal analogique émis par l'élément capteur (40), le signal de comparaison et le cas échéant le signal de référence sont adressés alternativement à l'entrée du dispositif convertisseur (50, 54).

6. Thermomètre à infrarouge selon la revendication 5, caractérisé par un commutateur (46) commandé par programme pour distribuer les signaux mesurés entre les entrées (50, 54 ; 56) du dispositif de traitement du signal.

7. Thermomètre à infrarouge selon une des revendications précédentes, caractérisé en ce que le dispositif de traitement du signal dispose d'une entrée supplémentaire des signaux mesurés, constituée d'un convertisseur analogique/numérique (56) et d'un microprocesseur (52) équipé d'une logique de calcul (68) et d'une logique de commande (66).

8. Thermomètre à infrarouge selon une des revendications précédentes, caractérisé en ce qu'il comporte une mémoire (82) programmable pour la mise en attente de données de linéarisation et d'étalonnage concernant les signaux mesurés, que le dispositif de traitement du signal comprend un bus interne (70) d'introduction et de sortie des signaux et des grandeurs de commande et qu'il est prévu une entrée (38) pour raccorder un thermomètre de contact (60) servant à déterminer la température de l'objet de la mesure et à fournir le facteur d'émission.

9. Thermomètre à infrarouge selon une des revendications précédentes, caractérisé en ce que le dispositif de traitement du signal est équipé d'un raccord (86, 88), en particulier un coupleur optique (86) permettant de raccorder un système de bus externe (90) d'entrée et de sortie, permettant notamment de commander et de programmer le dispositif de traitement du signal.

10. Thermomètre à infrarouge selon la revendication 9, caractérisé en ce que le raccord (86, 88) comprend un élément d'interface (88) raccordé à un système bus (90) par un conducteur à deux fils conçus pour transporter aussi bien de l'énergie que des informations, une unité centrale de commande et de programmation (96) étant raccordée au système bus (90).
